Europäisches Patentamt

European Patent Office

Office européen des brevets

(11) Publication number: **0 269 261**
**A1**

# (12) EUROPEAN PATENT APPLICATION

(21) Application number: 87309490.8

(22) Date of filing: 27.10.87

(51) Int. Cl.⁴: **B01D 23/10**

(30) Priority: 28.10.86 GB 8625746

(43) Date of publication of application:
01.06.88 Bulletin 88/22

(84) Designated Contracting States:
AT BE CH DE ES FR GB GR IT LI LU NL SE

(71) Applicant: APV Burnett & Rolfe Ltd.
Commissioners Road Strood
Rochester Kent, ME2 4EJ(GB)

(72) Inventor: Whibley, Graham John
10 Croftside Vigo Village
Meopham Kent, DA13 0SH(GB)
Inventor: Leeder, Geoffrey Ian
58 Norman Avenue Sanderstead
Croydon Surrey(GB)

(74) Representative: Rackham, Stephen Neil et al
GILL JENNINGS & EVERY 53-64 Chancery
Lane
London WC2A 1HN(GB)

(54) **A filter.**

(57) A filter for potable liquids comprises a housing (1) filled with a particulate filter medium (2), such as sand. A porous and permeable sintered membrane (3) extends across the housing to support the filter medium (2) and to form an interface between the filter bed and channels (8) underlying the membrane (3) through which the filtered beverage leaves the filter and a backwashing liquid enters the filter. The membrane (3) disperses the backwashing flow over the entire area of the filter bed so that complete fluidisation occurs.

In a preferred embodiment the membrane (3) is formed of sintered high density polyethylene.

Fig.3.

SAND FLUIDISED

EP 0 269 261 A1

## A Filter

The present invention relates to a filter for potable liquids and in particular beer and similar beverages. Filtration of such liquids is necessary to remove solids such as yeasts which might otherwise adversely affect the taste and appearance and may reduce the storage life of the beverage.

Conventionally beer has been filtered by passage through a porous material such as paper or fabric coated with a filter aid such as kieselguhr. Filters using kieselguhr have however proved expensive to run. Both the porous material itself and the kieselguhr filter aids are expensive and the need for frequent disposal of wet filter cake, the addition of fresh filter aid and the removal of spent material is costly both in terms of the materials themselves and the time for which the filter plant is out of use.

It has been proposed that the disadvantages of the conventional filtration processes may be overcome using an in-depth filtration through a bed of a granular medium of low cost and long life such as sand or bone char. Such a filter bed should have advantages since the filter medium is not changed but is regenerated by backwashing. In practice however it has been found difficult to achieve sufficiently effective backwashing of the filter medium when filtering beer and similar beverages. When the backwashing liquid is injected into the base of such a filter there are regions such as where the base of the filter column meets the walls or around joints or other structural features of the base supporting the sand where the sand is not fully fluidised and thus these regions are not cleansed. With beer and such beverages even a small amount of contamination of the filter medium building up in these regions can result in bacteriological activity there which leads to a deterioration in the quality and stability of the beverage. Thus the build-up of contaminants in these regions significantly reduces the time for which the filter bed can be run before it is necessary to close it down and sterilize it by, for example, flushing it with a hot caustic solution.

It is known in the context of water treatment filters to use a layer of gravel at the bottom of the filter bed which serves to disperse the liquid used in backwashing. The gravel may be loose or alternatively may be bonded together. US Patent No. 3011643 discloses a filter apparatus for swimming pools in which the filter bed rests upon gravel bonded together by a synthetic resin. Whilst the effectiveness of the backwashing in such a filter is sufficient for less critical applications it has been found to be inadequate for filters used for the treatment of potable liquids.

According to this invention a filter for potable liquids comprising a housing containing a bed of particulate filter medium supported by flow dispersing means is characterised in that the flow dispersing means comprise a porous and permeable sintered membrane which extends substantially completely across the housing to support the bed of filter medium and form an interface between the bed and channels underlying the membrane through which the filtered beverage leaves the filter, the porous and permeable sintered membrane dispersing the flow of backwashing liquid from the channels over substantially the entire area of the bed of filter medium so that complete fluidisation of the entire bed takes place during backwashing.

The pore aperture size of the membrane must be less than the smallest dimension of the particulate media to ensure that the membrane does not allow the media to leave the housing with the filtered beverage but preferably the pore aperture size is no more than half the size of the particulate media to prevent the membrane becoming blinded by the particulate material being embedded in its surface. Typically the porous membrane has a pore aperture size of less than 40 microns and still more preferably a size between 20 and 30 microns. Preferably the membrane has a high permeability since, in general, the degree of dispersion of the backwashing liquid is proportional to the degree of permeability of the membrane. Typically the permeability of the membrane is between 80 and 150 Darcies (cm$^2$ × 10$^{-8}$).

The porous and permeable membrane may be made of ceramic material but this is very brittle. When used with media of small size it is also difficult to obtain ceramic material which has the required pore aperture size and which is resistant to being sterilized using hot caustic solution. Preferably therefore the porous and permeable membrane is formed by a sintered material. The sintered material may be a sintered metal such as stainless steel but this also tends to be very friable. Again when subjected to hot caustic solution to sterlize it the thermal expansion of the membrane tends to cause it to crumble. Accordingly, it is very much preferred that the porous and permeable membrane is formed by a sintered plastics material. Such material is resilient and can withstand the stresses imposed by sterilizing with hot caustic solution.

Typically such filters are operated under pressure to keep gas in solution in beverages such as beer. Typically the filters operate at a superatmospheric pressure between 5 and 6 bar and are then subjected to a backwashing pressure of between 1 and 2 bar in the opposite direction. Preferably the particulate filter medium is formed by high density materials such as zirconium silicate or garnet having a specific density greater than substantially 3.5. Such a medium is much denser than conventional sand enabling it to be backwashed with a much higher flow velocity which reduces the time and volume of backwashing liquid required to backwash effectively. Preferably the medium is graded to have its grain size in a range from 75 to 100 microns. The use of such a small grain size for the particulate medium enables the filter to trap fine contaminants such as yeast. Preferably the sintered plastics material has a thickness in a range from 6 to 15 mm and preferably is at least 9 mm thick.

A sintered plastics material such as a sintered high density polyethylene contains a uniform distribution of small pores. Liquid injected at points on the bottom surface of such a sintered plastics material flows through the pores and is thereby dispersed evenly to the exposed top and side surfaces of the material, giving a substantially uniform flow out of all of these surfaces. Sintered plastics materials have the further advantage that individual plates may be joined by welding to form a single effectively continuous plate with the backwashing liquid dispersing across the join. A plate of whatever dimensions necessary for a particular plant may therefore be formed by welding from subsections with consequent advantages in terms of costs of materials and construction.

The sintered plastics membrane may extend over substantially the entire area of the base of the housing but stop short of the side wall of the housing. The dispersion of the backwashing liquid by the sintered plastics membrane causes it to flow out of the edge of the sintered plastics membrane adjacent the side wall of the housing and this causes fluidisation of the sand bed in the region of the intersection of the side wall and base of the housing which, in conventional filters, is often a dead space. Alternatively the porous and permeable membrane extends across the entire inside dimension of the housing and is joined to a surrounding ring of solid plastics material or embedded and sealed in a metal ring. In this case the surrounding ring is clamped between a pair of flanges of the housing to hold the membrane in position and since the porous part extends across the entire inside dimension of the housing, the backwashing liquid flows over the entire area of the bed of particulate media.

Preferably the sintered plastics material is formed as a disc and is supported by a circular plate in a cylindrical housing and channels extending between the top and bottom the plates are spaced at regular intervals around concentric annular zones. Preferably the spacing around the annular zones and the distances between the annular zones are chosen so that the area density of the channels is substantially uniform across the plate. The channels may lead into annular channels formed in the top surface of the plate.

Preferably an annular groove is also provided in the top surface of the plate towards its periphery to receive a resilient sealing ring. This forms a seal with the undersurface of the membrane. Preferably a spider including a ring of substantially the same diameter as the annular groove bears on the upper surface of the membrane to clamp the membrane against the resilient sealing ring. Preferably the uppermost surfaces of the spider and ring taper to ensure that no dead spaces are formed above them in the media bed.

A filter in accordance with the present invention will now be described in detail with reference to the accompanying drawings, in which:-

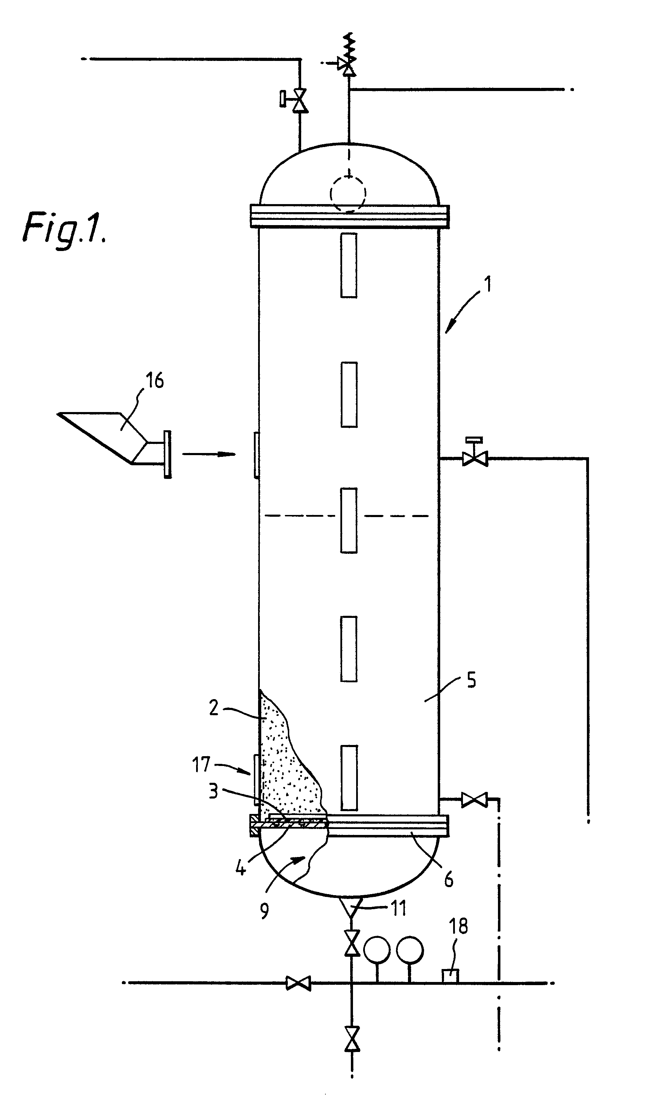

Figure 1 is a partly cut away side elevation of the filter housing;

Figure 2 is a partly sectioned side elevation through the base of a filter with the direction of liquid flow during filtration indicated;

Figure 3 is a partially sectioned side elevation of the base of a filter with the direction of flow of the liquid during backwashing indicated;

Figure 4A is a partially sectioned side elevation of an alternative emodiment;

Figure 4B is a cross section through a membrane and support ring;

Figure 5 is a partially sectioned side elevation of the filter of Figure 4 with the direction of flow during backwashing indicated;

Figure 6 is a plan of the base of a further embodiment;

Figure 7 is a sectional view on line AA of figure 6; and,

Figure 8 is a plan of a support plate.

A filter for beer comprises a cylindrical housing 1 filled to approximately half its height with particulate filter media 2 which is typically a high density sand. The media 2 rests on a sintered plastics membrane 3 supported by a support plate 4 which passes through the wall 5 of the housing and is clamped in place between flanges 6 at the bottom of the side wall and at the top of the base. A bolt on media chute 16 enables the introduction of sand into the housing 1. A pressure transducer 18 provides feedback for the control of the system.

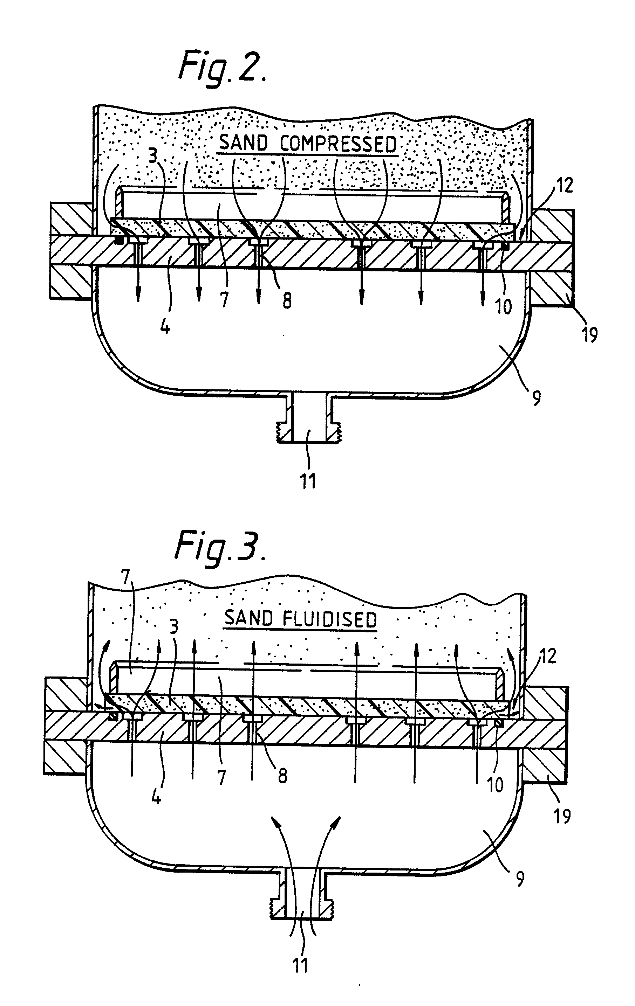

The sintered plastics membrane 3, shown in section in Figure 2, has the form of a disc of sintered high density polyethylene with a radius slightly less than that of the filter housing. The disc is 9mm thick, has a permeability of $100 \times 10^{-8} cm^2$ Darcies and retains particles of between 20 and 30 microns. Preferably it is formed from material known under the trade name of Sintercon grade 100 manufactured by Advanced Filtration Limited of Wrexham, North Wales. The membrane 3 is held in place on the supporting plate 4 by a clamp ring 7. Annular channels and holes 8 formed in the support plate 4 allow liquid communication between a cavity 9 below the support plate 4 and the filter bed via the membrane 3. A rubber O-ring 10 is fixed in an annular groove in the support plate 4 and provides a seal between the lower surface of the membrane 3 and the plate 4 to prevent direct communication between the filter bed and the channels and holes 8 in the support plate 4.

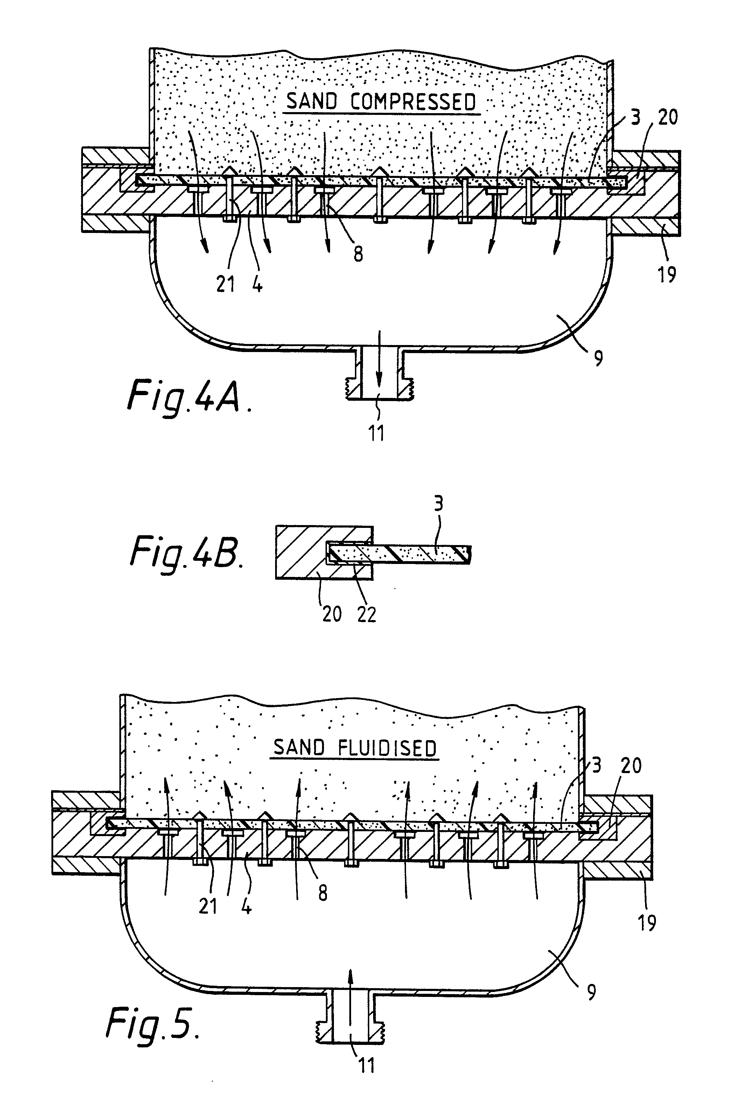

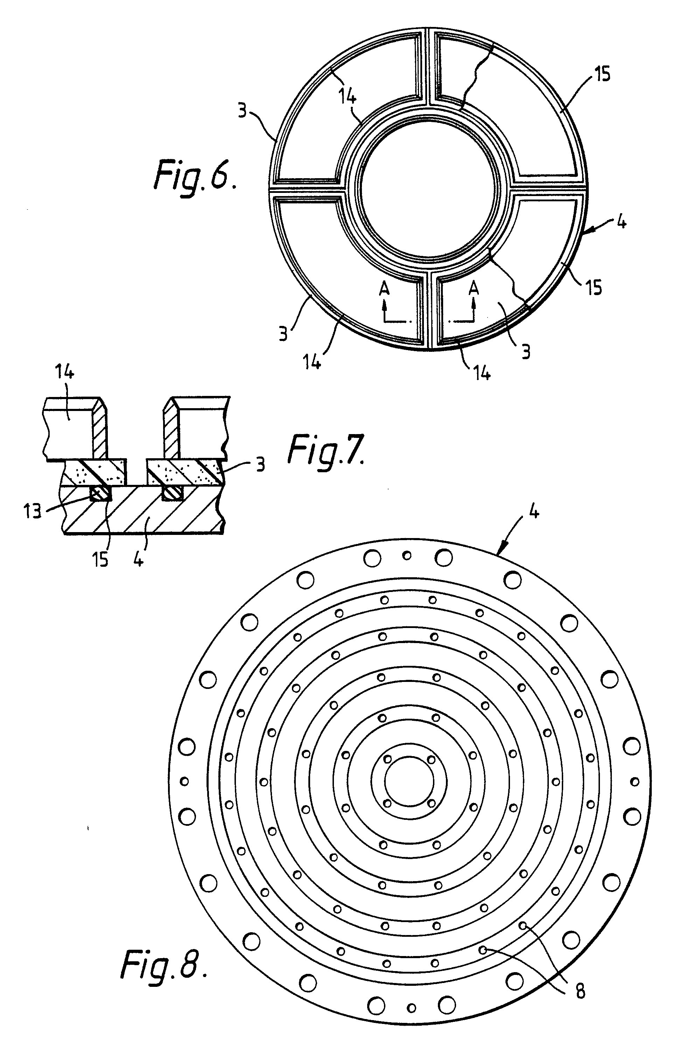

As shown in figure 8 the holes are regularly spaced around the support plate 4 in concentric annular zones. In a pilot scale filter the membrane 3 and the plate 4 have diameters of 0.57 and 0.68 m respectively. Sixty-six holes of 10 mm diameter are distributed among five annular channels, the channels being separated from each other and from the centre of the plate 4 by substantially 0.1 m. In an alternative embodiment shown in figure 4A the membrane has a greater radius than the housing 1 and is embedded and sealed in a metal ring 20 as shown in Figure 4B. Alternativley the membrane 3 may be joined to a surrounding ring of plastics material. In this embodiment the membrane 3 is fixed to the support plate by bolts 21 positioned with a 150 mm square pitch.

As an alterantive to forming the disc as a single integral solid a number of individual tiles may be used as shown in figure 6. Building the disc in this manner facilitates the process of construction when, as is often the case, components have to be brought into the vessel through a manway of restricted size. In the arrangement shown the disc is formed from a central tile 21 surrounded by four part-annular tiles 22. A clamp 14 on the surface of each tile 21,22 along its periphery holds the tile 21,22 on the support plate 4 forming a seal with a rubber sealing ring held in corresponding grooves 15 in the surface of the support plate 4.

The membrane 3 and the channels and holes 8 in the support plate 4 provide the path for the beer leaving the media 2 during filtration as shown in Figure 2. Beer is initially injected at the top of the column 1 under a pressure of up to 5 Bar. It passes down the column 1 through the media 2 and into the cavity 9 via the membrane 3 and the channels and holes 8. The height of the bed and the size of the media are chosen to ensure uniform deposition of solids throughout the height of the bed 2, to capture as much as possible of the solids such as yeast cells entrained in the beer and to maximise the throughput. However the nature of the media 2 used is also constrained by its backwashing characteristics. Preferably the media is zirconium silicate sand with grains of size in a range from 75 to 100 microns. Alternatively other high density sands such as garnet may be used. In this pilotscale filter the housing 1 is 2.4 m nign and the depth of the bed is 1 m. The filter has a throughput of 14 hectolitres per hour. The high density of the zirconium silicate sand however means that a backwash flow of substantially twice that for silica sand can be used which enables backwashing to occur rapidly and with a smaller volume of effluent being produced. With such high velocity flow during the backwashing there is a greater turbulence between the particles of sand and this ensures a more thorough cleaning of them.

To backwash the filter the flow of beer into the top of the filter is stopped and replaced by a flow of clean fresh water. This drives all the beer through the bed and when the interface between the water and beer reaches an outlet 11 in the base of the housing the outlet is switched to drain. Then the top of the housing is connected to the drain and clean water under a pressure of 1-2 bar is connected to the outlet 11 to backwash the bed. The channels and holes 8 and the membrane 3 ensure substantially uniform fluidization of the media 2 during backwashing. The water passes from the cavity 9 through the holes and channels 8 in the support plate 4 into the undersurface of the membrane 3. It then flows from both the upper surface and the exposed side surfaces of the membrane 3. The porous structure of the membrane 3 is such that the water entering the membrane 3 at a single point is dispersed leaving the membrane 3 over a wide area. The water leaving the membrane 3 via its side walls ensures good fluidisation of the bed in the region 12 at the intersection between the walls 5 of the housing 1 and the support plate 4. The fact that there are no fixings for the support plate 4 on the interior of the wall 5 in the region 12 also helps to prevent poor fluidisation in this area. The clamp ring 7 with its tapering upper surface does not significantly disrupt the flow of liquid from the membrane 3. Moreover the membrane 3 allows a free flow of liquid immediately adjacent the clamp ring 7 and especially between the clamp ring 7 and the inside wall of the housing 1. The sintered high density polyethylene is typically welded on its undersurface when it is necessary to fabricate the membrane from pieces and this causes no signficant disruption in the flow pattern across the membrane 3 in view of the dispersion of the flow by the membrane 3. Thus there are no effective discontinuities in the element 3 even when it is formed initially from several subsections. All these factors combine to ensure uniform fluidisation of all the bed 2 and this greatly increases the effectiveness of the backwashing.

Typically the filter is backwashed only with water for a number of cleaning cycles and then, say once a week, is subsequently treated with hot caustic solution with the flow either in the downward or upward (backwashing) direction to sterilise the system.

## Claims

1. A filter for potable liquids comprising a housing (1) containing a bed of particulate filter medium (2), supported by flow dispersing means, characterised in that the flow dispersing means comprise a porous and permeable sintered membrane (3) which extends substantially completely across the housing to support the bed of filter medium and form an interface between the bed (2) and channels (8) underlying the membrane (3) through which the filtered beverage leaves the filter and a backwashing liquid enters the filter, the porous and permeable sintered membrane (3) dispersing the flow of backwashing liquid from the channels (8) over substantially the entire area of the bed of filter medium (2) so that complete fluidization of the entire bed (2) takes place during backwashing.

2. A filter according to claim 1, in which the membrane (3) is formed of a sintered plastics material.

3. A filter according to claim 2, in which the sintered plastics material is a high density polythelene.

4. A filter according to claim 2 or 3, in which the sintered plastics material (3) is formed as a disc and is supported by a circular plate (4) in a cylindrical (1) housing and channels (8) extending between the top and bottom of the plate (4) are spaced at regular intervals around concentric annular zones, the spacing around the annular zones and the distances between the annular zones being chosen so that the area density of the channels (8) is substantially uniform across the plate.

5. A filter according to claim 4, in which an annular groove (15) is provided in the top surface of the plate (4) towards its periphery to receive a resilient sealing ring (10).

6. A filter according to any one of the preceding claims in which the sintered membrane (3) extends over substantially the entire area of the base of the housing (1) but stops short of the side wall of the housing.

7. A filter according to any one of the proceeding claims in which the particulate filter medium (2) is garnet sand.

8. A filter according to any one of the claims 1 to 6, in which the particulate filter medium is zirconium silicate.

9. A filter according to claim 7 or 8, in which the filter medium is graded to have its grain size in a range from 75 to 100 microns.

10. A filter according to any one of the preceding claims, in which the porous membrane has a pore aperture size of less than 40 microns and a permeability between 80 and 150 Darcies ($cm^2 \times 10^{-8}$).

Fig.1.

Fig. 2.

SAND COMPRESSED

Fig. 3.

SAND FLUIDISED

0 269 261

SAND COMPRESSED

*Fig.4A.*

3
20
19
21
4
8
9
11

*Fig.4B.*

3
20  22

SAND FLUIDISED

*Fig.5.*

3
20
19
21
4
8
9
11

*Fig.6.*

*Fig.7.*

*Fig.8.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 011 643 (A.C. McCOY) * Column 1, lines 54-59; column 2, lines 56-72; column 5, lines 39-54 * | 1 | B 01 D 23/10 |
| A | US-A-2 716 490 (E.D. BARSTOW) * Column 3, lines 9-24; column 4, lines 68-75 * | 1 | |
| A | US-A-4 458 059 (L.D. FIELDS) * Column 2, lines 9-12; column 3, lines 7-44; column 4, lines 13-27 * | 1,5 | |
| A | US-A-3 178 026 (C.M. CHRISTY) * Column 2, lines 38-57; column 3, lines 60-75 * | 1,5 | |
| A | GB-A-1 260 591 (R.E.W. HARRIS) * Page 1, lines 91-98 * | 1,2,3 | |
| A | US-A-4 441 997 (L.D. FIELDS) * Column 1, lines 34-68; column 2, lines 34-36,66-68; column 3, lines 1-4; column 4, lines 14-39 * | 1,4 | TECHNICAL FIELDS SEARCHED (Int. Cl.4)  B 01 D |

The present search report has been drawn up for all claims

| Place of search | Date of completion of the search | Examiner |
|---|---|---|
| THE HAGUE | 22-01-1988 | KERRES P.M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

         

& : member of the same patent family, corresponding document

EPO FORM 1503 03.82 (P0401)